# EUROPÄISCHE PATENTANMELDUNG

(11) **EP 4 656 345 A1**
(43) Veröffentlichungstag der Anmeldung: **03.12.2025**
(21) Anmeldenummer: 25000061.9
(22) Anmeldetag: 27.05.2025
(51) Int. Cl.: B28B 1/00, B28B 1/08, B33Y 10/00, B33Y 30/00, E04G 21/04

(54) **3D-VIBRATIONSDRUCKSYSTEM ZUR RHEOLOGIEBEEINFLUSSUNG GRÜNSTANDFESTER GEMENGE UNTER AUSNUTZUNG DER SCHWERKRAFTEINWIRKUNG UND VERFAHREN ZUM 3D-DRUCK**

(30) Priorität: 28.05.2024 DE 202024001036 U
(71) Anmelder: Institut für Angewandte Bauforschung Weimar gGmbH, 99428 Weimar (DE)
(72) Erfinder: BRETSCHNEIDER, Martin, 99448 Kranichfeld (DE)

(57) **Zusammenfassung**

Die Erfindung betrifft ein Vibrationsdrucksystem mit einem Druckkopf (1) zum 3D-Druck von Strukturen aus einem thixotropen Material, beispielsweise Beton oder keramischen Massen, sowie ein Vibrationsdruckverfahren. Das Vibrationsdrucksystem umfasst eine Gemengezuführung (2), einen Vorratsbehälter (9) und eine Druckdüse (6) zum Gemengeaustritt. Am Vorratsbehälter (9) oder an einem Rohr der Gemengezuführung (2) ist ein sekundärer Schwingungserreger (10) angeordnet, mittels dessen das Material entlüftet, vorverdichtet und zum Druckkopf (1) gefördert wird.

Erfindungsgemäß ist am Druckkopf (1) ein primärerer Schwingungserreger (5) angeordnet, welcher die Scherspannung des Materials beeinflusst und dessen Fließfähigkeit erhöht, sodass es unter Wirkung der Schwerkraft ausgetragen wird. Im Zusammenwirken mit Seitenformern (3) kann so in einem Aktivierungsbereich, der sich mit dem Druckkopf (1) bewegt, ein Lagenverbund mit darunter liegenden, bereits grünstandfesten Schichten frisch-in-frisch erreicht werden.

## Beschreibung

### Technisches Gebiet der Erfindung

Die hier beschriebene Erfindung lässt sich dem Gebiet des 3D-Druckes mit pastösen Materialien zuordnen. Es wird eine Technologie zur Sicherstellung eines 3D-Druckes von pastösen Materialien auf Basis mechanisch gezielt beeinflusster Fließeigenschaften dargelegt.

### Stand der Technik

Bei aktuell bekannten 3D-Druckverfahren für pastöse, vornehmlich durch Hydratation aushärtende Gemenge, insbesondere Beton, bestehen in verarbeitungstechnischer Hinsicht im Wesentlichen zwei Herausforderungen. Dies betrifft die unterschiedlichen Anforderungen an die Rheologie, zum einen im Förder- und Drucksystem und zum anderen nach Aufbringung.

So benötigen die bisher bekannten 3D-Betondruckverfahren in der Regel Gemenge, deren rheologische Eigenschaft sich zeitlich stark verändern, um die Anforderungen im jeweiligen Verarbeitungsschritt sicherzustellen. Dabei konkurrieren Förderfähigkeit durch die Düse, Formstabilität nach dem Austrag, schnelles Erreichen der Grünstandfestigkeit sowie guter Schichtverbund mit teils gegenteiligen Anforderungsprofilen miteinander. Diese hohen Anforderungen an das zeitlich abhängige rheologische Verhalten des Gemenges bedingen ein zeitlich sehr eng getaktetes Zeitraster für die Verarbeitung in den jeweiligen Prozessschritten, da sie mit Hilfe von Zusatzstoffen im Gemenge gesteuert werden müssen. Hierdurch entstehen aber auch die Problemfelder bei einer nicht immer zu gewährleistenden kontinuierlichen Verarbeitung, die sich mindestens in Schwankungen der rheologischen Eigenschaften des Gemengeaustrags niederschlagen. Bisher wird keine gezielte modulspezifische Beeinflussung der rheologischen Gemengeeigenschaften durch die Nutzung mechanischer Schwingungseinwirkungen verwendet, die mit steiferen grünstandfesten Gemengen arbeiten kann. Auftretende Scherbeanspruchungen, die einen Einfluss auf die Rheologie haben, ergeben sich zwangsläufig aus den bisher genutzten Förderprinzipien und Förderstreckenkonturen, werden aber nicht gezielt parametriert und genutzt.

Die üblichen hierbei verwendeten Gemenge zeichnen sich wegen der meistgewählten Förderung mit Extruder durch ihren hohen Feinkornanteil, ggf. in Verbindung der Abwesenheit grobkörniger Anteile, aus. Die Konsistenz in der Zufuhr ist so gewählt, dass es förder- bzw. pumpfähig ist, was teilweise die Zugabe eines Erstarrungsbeschleunigers kurz vor dem Austritt erfordert, damit das Gemenge in der ausgetragenen Strangform einer Druckschicht verbleibt. Damit ist aber bei dem erneuten Bedrucken des Materials nur ein unzureichender Verbund frisch-in-frisch gegeben, was zum einen die Gesamtfestigkeit der Struktur im Vergleich zu konventionellen Verfahren stark beeinträchtigt. Zum anderen steigt bei entsprechend dickem Schichtauftrag durch zeitliche Verzögerungen in der Wirkung von Erstarrungsbeschleunigern ungewollt die Fertigungsrauigkeit an den abgelegten Strangoberflächen, die anschließend nur aufwändig ausgeglichen werden kann. Bei entsprechend weniger hohem Auftrag entstehen zwar glattere Seitenflächen, es sinkt aber dadurch das ausgetragene Druckvolumen je Zeit. Hinzu kommt die aufwändige und verschleißanfällige Extrudertechnologie der bestehenden Drucksysteme, die eine praxisgerechte Nutzung und robuste Verfahrensführung deutlich im Aufwand steigern.

Die Technologie im beschriebenen Stand der Technik ist auch anfälliger bei Störungen im Prozessverlauf, sodass es bei Pausen sehr schnell zu einem Erstarren und möglichen Aushärten des Gemenges kommt, was eine schnelle Entsorgung im Fall einer Unterbrechung und/oder eine aufwändige mechanische Reinigung des Systems vom erhärteten Material erfordert.

Aus dem Stand der Technik ist die Offenlegungsschrift DE 10 2018 217 141 A1 bekannt, deren Hauptanspruch sich auf die Verwendung eines Austrittsverhinderungsabschnitts richtet, der ein Austritt des Betonmaterials in Richtung des Vorschubs des Druckkopfs verhindern soll. Der Druckkopf kann eine Energiezuführeinrichtung aufweisen, die ausgestattet ist, dem Betonmaterial innerhalb des formgebenden Abschnitts Energie zuzuführen, z.B. in Form von Heizbändern. Das Abbinden des Materials soll beschleunigt werden. Zwischen benachbarten Schichten des Betonmaterials wird eine Bindemittelschicht abgelegt. Es ist auch vorgesehen, Bewehrungselemente einzusetzen. Das System arbeitet mittels Extruderschnecken. Es geht gemäß der Offenlegungsschrift nicht um die gezielte Herabsetzung der Viskosität zum Austrag des Materials und dessen Verbund mit schon vorher ausgetragenen Schichten aufgrund der Erniedrigung der Viskosität. Anderweitig wird die Energieeinwirkung benutzt, um eine schnellere Abbindung zu erreichen, beschrieben in einem Verfahren der Patentschrift DE 10 2019 120 939 B4 der Firma Sonocrete GmbH.

Angrenzende Schutzrechte, wie z.B. das Gebrauchsmuster DE 20 2024 101 132 U1, betreffen einen komplexen 3D-Druckkopf. Hier wird unter anderem das Düsensystem zum Ausbringen von pumpfähigem Beton/Mörtel und Zusatzstoffen betrachtet, insbesondere die Verwendung mehrerer Einspritzdüsen. Vibration kommt nicht zum Einsatz.

Es wird eingeschätzt, dass der 3D-Druck, insbesondere von Beton, unter Nutzung einer wesentlich wirtschaftlicheren Technik als Pumpen oder Extruder im Austrag, möglich ist.

### Beschreibung der Erfindung

An dieser Stelle soll das hier vorgeschlagene System unter Ausnutzung der rheologischen Gemengeeigenschaften ansetzen, um diese Nachteile in der Fertigung zu unterbinden.

In der vorliegenden Erfindung sollen nachteilige Eigenschaften bestehender Drucksysteme mit einem Vibrationsdrucksystem und im weitesten Sinne einem grünstandfesten Gemenge, insbesondere bei Beton, behoben werden. Dabei ist es möglich, eine Schichtaufbringung frisch-in-frisch durch die zusätzliche Erregung der Oberfläche eines grünstandfesten Gemenges innerhalb eines hinreichenden Wiederbedruckungszeitraumes und somit einen guten Schichtverbund zu erreichen. "Frisch-in-frisch" hat dabei die im Stand der Technik bekannte Bedeutung, dass bei einem schichtweisen Auftrag - hier Drucken - von Material eine untere Schicht, auf die Material aufgetragen werden soll, noch nicht abgebunden bzw. ausgehärtet ist, während Material in der nächsten Schicht aufgetragen wird. Durch die Vibrationseinwirkung zwischen beidseitig vorgesehenen Seitenformern wird ein Austritt aus dem Auftragsbereich ausgeschlossen. Jedoch erfolgt ebenso ein nahezu vollständiges Ausfüllen des Auftragsbereiches, sodass glatte Außenkonturen entstehen können. Durch den vollflächigen Verbund frisch-in-frisch wird eine hohe Standfestigkeit erreicht. Damit entfällt die obligatorische, mehr oder minder ausgeprägte, Wulst. Für Nacharbeiten, insbesondere die Erstellung einer glatten Oberfläche, ist weniger Zeit- und Materialaufwand notwendig.

Da bei der vorgesehenen Art des 3D-Betondruckes weitgehend auf grünstandfeste Betongemenge zurückgegriffen wird, ist ein Einsatz von sehr schnell wirkenden Erstarrungs- bzw. Erhärtungsbeschleunigern nicht erforderlich. Somit können die engen Zeitregime der Verarbeitung, welche in anderen Systemen herrschen, vermieden werden.

Es wird vorgeschlagen, dass bei den Betongemengen Korngrößen von mindestens bis zu 8 mm zum Einsatz kommen und ein für diese Gemenge üblicher Feinanteil enthalten ist. Es hat sich in Versuchen gezeigt, dass auch darüber hinaus, also im Bereich der gröberen Gesteinskörnungen, ein 3D-Druck mit Vibration durchführbar ist.

Die konstruktive Gestaltung des neuartigen Drucksystems, ohne insbesondere im Gemenge liegende Einbauten und die konische Ausbildung des Systems zum Vorratsbehälter hin, ermöglicht auch im Falle eines Erstarrens oder Abbindens des Gemenges eine problemlosere Entleerung entgegen der Austragsrichtung. Durch das Gemengekonzept ohne Erstarrungs- und Erhärtungsbeschleuniger ist eine Entleerung und Entsorgung von Gemenge in deutlich weniger Fällen erforderlich.

Das vorgeschlagene System basiert auf einem vibrationsinduzierten Austrag, welcher vornehmlich auf Schwerkraftwirkung beruht. Entfällt die Vibration, ist das Material so steif (bei Beton grünstandfest), dass kein Austrag erfolgt. Die Vibrationseinträge sind so abzustimmen, dass der Austragsvorgang steuerbar ist, der Verbund zum vorherigen Austrag frisch-in-frisch erfolgen kann und die Hohlräume zwischen den Seitenformern möglichst vollständig mit glatter Oberfläche ausgefüllt werden.

Auf Basis eines Vorratsbehälters mit gerader Druckaustraggeometrie und durch Einsatz gezielter Vibrationseinträge speziell am Druckkopf sowie Nutzung der Schwerkraft wird hier ein alternatives Verfahren zum Drucken mit Beton beschrieben. Es wird insbesondere die Standfestigkeit und Formhaltung der gedruckten Strukturen sichergestellt.

Da die Beschickung des Systems mit Gemenge vorwiegend schüttgutartig erfolgt, kann die Vorverdichtung, Entlüftung und Förderung zum Druckkopf im System vorteilhaft durch Einbringung von zusätzlichen Schwingungen erreicht werden. Die für den Austrag maßgebliche primäre Schwingung, welche von einem oder mehreren primären Schwingungserregern erzeugt wird, darf in ihrer Wirkung nicht von einer optionalen sekundären Schwingung, welche von einem oder mehreren sekundären Schwingungserregern erzeugt wird, die Anteil an der Gemengezuführung zur Verdichtung und Förderung haben, überblendet werden, sodass mit der primären Schwingung in Austrittnähe der Austrag gesteuert werden kann. Sämtliche einwirkende - primären und ggf. sekundären - Schwingungen sind so parametriert, dass die Verteilung der Korngrößen im Material gleichmäßig bleibt und es z. B. nicht zu einem Absacken von Körnung oder einer Entmischung kommt. Die vorgenannten Gegebenheiten der Gemengezusammensetzung, des vollflächigen Verbundes und der nachfolgend erforderlichen Arbeiten erlauben eine nachhaltigere Ausführung von Strukturen oder Bauten mit weniger Zementanteil bei Betongemengen und sparen somit Emissionen ein.

Der Erfindung liegt das Problem zugrunde, eine sichere Verbindung der Drucklagen und die Einsparung von Zement aufgrund gröberer verwendbarer Körnungen zu erreichen. Dieses Problem wird durch ein Vibrationsdrucksystem gemäß Anspruch 1 und ein Vibrationsdruckverfahren gemäß Anspruch 8 gelöst. Vorteilhafte Ausgestaltungen sind in den Unteransprüchen aufgeführt. Dazu wird der Druckkopf mit dem Schwingungserreger so ausgestattet, dass über eine geeignete Erniedrigung der Fließgrenze des Gemenges durch lokalen Scherspannungseintrag und Nutzung der Schwerkraft der gezielte Druckaustrag erfolgt. Zusätzlich werden, über die nach dem Prinzip des Systems erzeugte Herabsetzung der Fließgrenze, weitere im Folgenden beschriebene Eigenschaften genutzt. Die Technologie arbeitet dazu ohne Extruder.

Durch den Einsatz eines grünstandfesten Gemenges und den dadurch in geringerem Umfang erforderlichen Zusätzen zum Ansteifen bzw. Aushärten in kurzer Zeit, ist eine optimale Verbindung der Lagen frisch-in-frisch möglich. Mit dem Wegfall des Extruders können größere Körnungen im Gemenge verarbeitet werden. Damit ist das ausgetragene Materialgemenge mit Gemengen herkömmlicher Fertigungsverfahren, beispielsweise bei Einsatz von Ortbetonschalungen auf der Baustelle, vergleichbar. Gleichzeitig kann mit dem Verfahren eine nahezu glatte Außenkontur erzeugt werden, wodurch sich die übliche Nacharbeit im Vergleich zu gedruckten, stärker profilierten, üblicherweise wulstartigen Wänden in Grenzen hält.

Zudem dient der Energieeintrag, insbesondere durch Vibration bzw. Schwingung mit geeigneter Frequenz, Amplitude und Kurvenform, der Gemengezuführung aus dem Vorratsbehälter, der Entlüftung sowie der Vorverdichtung des möglicherweise portioniert zugeführten Gemenges. Weitere sekundäre Schwingungserreger am Vorratsbehälter können auch in Druckpausen aktiv sein. Dies kann vorzugsweise mit anderen Erregungsparametern erfolgen. In Druckpausen kommt es dadurch nicht zum nachteiligen Gemengeaustritt an der Druckdüse.

Diese Vorteile werden durch eine gezielte Ausnutzung der rheologischen Eigenschaften des zu druckenden Materials ermöglicht. Unter dem Begriff "Material" werden dabei einerseits reine Materialien, wie beispielsweise keramische Massen, oder auch Materialgemenge, wie z. B. Betongemenge verstanden. Allgemein ist auch die Verwendung anderer, durch Schwingungen in den rheologischen Eigenschaften beeinflussbare Gemenge oder Gemische möglich. Dies ist bei thixotropen Medien gegeben. Im Zustand der Beeinflussung durch lokal eingebrachte Schwingungen soll durch gezielte Änderung der Scherspannung das Material plastisch gut verformbar sein und nach Ende bzw. Abklingen des Schwingeintrags nur noch einen weitestgehend formstabilen Zustand (Grünstandfestigkeit) besitzen. Hierfür ist vorgesehen, den Druckkopf mit einem Energieeintrag, insbesondere durch Schwingungserreger, auszustatten.

Mit der Erfindung wird erreicht, dass beim 3D-Druckverfahren eine dauerhafte Verbindung der Drucklagen untereinander auch bei zügigem Gemengeaustrag entsteht, wodurch Schicht für Schicht eine entsprechende Standfestigkeit sichergestellt wird.

Für den Druckvorgang ist eine sichere Zuführung des Gemenges erforderlich. Dies erfolgt bei steiferen Gemengen nach dem Stand der Technik üblicherweise mit einem Extruder, der aus einem Vorratsbehälter das Gemenge möglichst luftfrei der Druckdüse zuführt. Da hier in der beschriebenen Druckeinrichtung auf einen Extruder verzichtet werden kann, wird dieser Nachteil eliminiert. Die Druckeinrichtung kann in der Gemengezuführung ebenfalls eine Vibrationsanregung besitzen, welche portioniert zugeführte Gemenge verdichtet und dem Druckkopf zuführt. Die Gemengeverdichtung und der Gemengefluss sind neben einer Zuführung zumindest im Druckvorgang aktiv.

Die Voraussetzungen für die Funktion des Systems sind, dass das Material bzw. Materialgemenge die dafür notwendigen Eigenschaften aufgrund seiner Bestandteile aufweist. Hierbei handelt es sich beim Betongemenge um Wasser, Bindemittel, (Gesteins-) Körnung und Zusatzstoffe. Zudem soll die Schwingungserregung am geeigneten Ort im dazu passenden Frequenz- und Pegelbereich mit geeigneter Kurvenform erfolgen und so gestaltet sein, dass das - optional portioniert zuführbare - Gemenge im schwingungsaktivierten Zustand "fließt", verdichtet und entlüftet, und nach Ende bzw. Abklingen der Einwirkung der Vibrationen grünstandfest ist, sowie sich durch die Schwingeinwirkung nicht entmischt, in seiner Homogenität negativ beeinflusst wird oder weitere Effekte der erwünschten Verwendung nicht entgegenstehen.

Die Haupteinwirkung der Schwingungserregung soll vornehmlich im Frequenzbereich von 40 bis 100 Hz liegen. Der primäre bzw. die primären Schwingungserreger am Druckkopf ist bzw. sind so angeordnet, dass die schwingungstechnische Beeinflussung des Materialgemenges sowohl außerhalb der Druckdüse 6 als auch innerhalb der Seitenführung/-former 3 erfolgt. An die Druckdüse mit Materialaustritt schließt sich ein beidseitiger Seitenführer/-former an, um im Erregerbereich eine Formung der seitlichen Flächenelemente der ausgetragenen Druckschicht zu erhalten, sowie ein Verfließen außerhalb des vorbestimmten Bereiches zu verhindern. Die Seitenführung ist konstruktiv und schwingungstechnisch so gestaltet, dass nach Verlassen des Bereiches der formenden Elemente in Bewegungsrichtung die Fließfähigkeit des Gemenges entsprechend schnell wieder absinken kann, sodass Grünstandfestigkeit erreicht wird, damit das durch den Druckkopf eingebrachte fließfähige Material nur den Raum innerhalb der Seitenführung/-former nahezu hohlraumfrei ausfüllt.

Die vorliegende Erfindung erzeugt im Druckkopf einen Energieeintrag durch mechanische Vibrationen, der durch eine Scherbeanspruchung dem Thixotropieeffekt des Betongemenges entgegenwirkt und eine für den 3D-Druck günstige temporäre Senkung der Viskosität und der Fließgrenze im Einflussbereich des Materialaustritts entstehen lässt.

Durch das Abklingen der Schwingung beim Weiterfahren des Drucksystems aus dem Austragsbereich heraus geht das Material anschließend in seinen ursprünglich steiferen Zustand zurück, der als grünstandfest bekannt ist. In diesem Zustand steht die Struktur stabil in der geformten Drucklage.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

### Kurze Beschreibung der Zeichnungen

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Es zeigen:
- Fig. 1: den prinzipiellen Aufbau eines Vibrationsdrucksystems und
- Fig. 2: einen Ausschnitt des Vibrationsdrucksystems aus Fig. 1

### Ausführliche Beschreibung der Zeichnungen

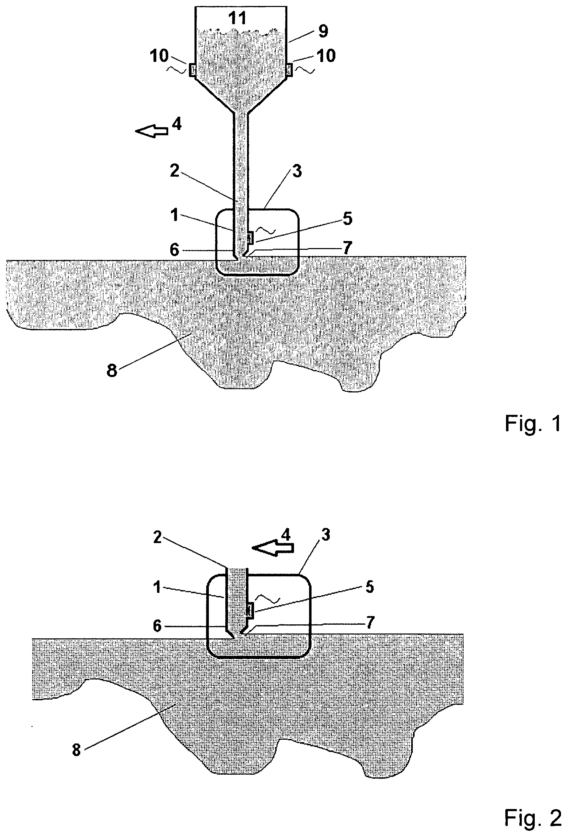

In Figur 1 ist der prinzipielle Aufbau mit den wesentlichen Komponenten des Vibrationsdrucksystems dargestellt.

Der Druckkopf 1 wird mit dem zu druckenden Material aus der Gemengezuführung 2 mit einer zur Druckgeschwindigkeit passenden Fördermenge aus dem Vorratsbehälter 9 beschickt. Die Seitenführung/-former 3 sorgt für die gewünschte seitliche geometrische Ausführung des Austrages. Die Anordnung aus Druckkopf und Seitenführung bildet im Wesentlichen eine Art Druckschlitten. Das Material der neuen Druckschicht 7 wird in Bewegungsrichtung 4 des Systems über die Druckdüse 6 mit Materialaustritt auf die bereits bestehenden Drucklagen 8 aufgetragen, sofern vorhanden. Das Gemenge aus dem Gemengevorrat 11 wird über eine schwerkraftbasierte Gemengezuführung 2 aus dem Vorratsbehälter 9 dem Druckkopf 1 zugeführt. Der oder die sekundären Schwingungserreger 10 am Vorratsbehälter 9 sind zur Vorverdichtung des Gemenges und für die Versetzung in einen Fließzustand aufgrund der geänderten Rheologie vorhanden.

Nach Verlassen des lokal in Bewegungsrichtung wirkenden Erregerbereiches wird die Fließfähigkeit in der Folge geringer, so dass das gedruckte Materialgemenge die entsprechende Formstabilität besitzt und ein Verlaufen der neu gedruckten Materialschicht im Aktivierungsbereich - der lokale, mit der Druckdüse wandernde Bereich zwischen den Seitenformern 3, in welchem das Material auf ggf. darunter befindliche Drucklagen aufgetragen wird - verhindert wird. Die partielle Erregung des Materialgemenges im Bereich des Auftrages hat Einwirkung auf die darunterliegende Schicht. Somit wird die Verbindung der Drucklagen in einer Phase im Aktivierungsbereich frisch-in-frisch abgesichert, d.h. ein Lagenverbund im gleichen System hergestellt. Das System arbeitet, abgesehen von der Vibration, maßgeblich über Schwerkraft.

Das Prinzip des Vibrationsdrucksystems beruht auf der temporären Herabsetzung der Fließgrenze und Viskosität des Materials durch Einbringung einer geeigneten, oben beschriebenen Schwingung mit dem primären Schwingungserreger 5 am Druckkopf, das dem Zweck der Erzeugung einer Verbindung des Materialauftrages mit den schon vorhandenen Drucklagen und dem grünstandfesten Stehen der gefertigten Struktur nach Abschwächung des Schwingeintrages durch die Weiterbewegung des Druckkopfes dient. Damit ist die Zusammensetzung des Materialgemenges, vorteilhafterweise ohne die Verwendung von Erstarrungsbeschleuniger, sehr gut beherrschbar und das Ziel des Systems, ebenfalls eine optimale schlüssige und materialbezogene Verbindung zur vorherigen Drucklage zu erreichen, gegeben. Die Schwingungserregung kann durch geeignete periodische und/oder transiente Formen inklusive Impulsen erfolgen.

Fig. 2 stellt einen Ausschnitt aus Fig. 1 dar.

Das Material der neuen Druckschicht 7 wird in Bewegungsrichtung 4 des Systems über die Druckdüse 6 mit Materialaustritt auf die bereits bestehenden Drucklagen 8 aufgetragen. Vorteilhaft ist, dass das frisch eingebrachte Material dabei den Raum innerhalb der Seitenführung nahezu hohlraumfrei ausfüllt.

### Bezugszeichenliste

- 1: Druckkopf
- 2: Gemengezuführung
- 3: Seitenführung/-former
- 4: Bewegungsrichtung
- 5: primärer Schwingungserreger
- 6: Druckdüse
- 7: neue Druckschicht
- 8: Drucklagen
- 9: Vorratsbehälter
- 10: sekundärer Schwingungserreger
- 11: Gemengevorrat

## Patentansprüche

1. Vibrationsdrucksystem mit einem Druckkopf (1) zum 3D-Druck von Strukturen aus einem thixotropen Material, umfassend eine Gemengezuführung (2), einen Vorratsbehälter (9) und eine Druckdüse (6) zum Gemengeaustritt, **dadurch gekennzeichnet,**
- **dass** der Druckkopf (1) mit einem primären Schwingungserreger (5) am Druckkopf ausgestattet ist, welcher die Scherspannung des auszutragenden Materials, ausgehend von der Gemengezuführung (2) in den Druckkopf (1) durch einen Schwingungseintrag beeinflusst,
- **dass** beidseitig des Druckkopfes (1) Seitenformer (3) angeordnet sind, zwischen welchen sich ein Aktivierungsbereich befindet,
- wobei der primäre Schwingungserreger (5) die Fließgrenze und Viskosität des entlüfteten Materials im Durchgang durch die Druckdüse (6) mit Materialaustritt durch den Schwingungseintrag temporär herabsetzt und damit fließfähig und plastisch verformbar macht, und
- wobei das entlüftete Material nach Verlassen des lokal wirkenden Erregerbereiches in Bewegungsrichtung (4) innerhalb des Aktivierungsbereiches einen Lagenverbund im gleichen System frisch in frisch herstellt und mit hinreichend verminderter Fließfähigkeit den Aktivierungsbereich verlässt, sodass Grünstandfestigkeit erreicht wird.

2. Vibrationsdrucksystem nach Anspruch 1, **dadurch gekennzeichnet, dass** der primäre Schwingungserreger (5) am Druckkopf (1) so angeordnet ist, dass die Beeinflussung des Materials sowohl außerhalb der Druckdüse (6) als auch innerhalb der Seitenführung/-former (3) erfolgt.

3. Vibrationsdrucksystem nach Anspruch 1 oder 2, **dadurch gekennzeichnet, dass** am Vorratsbehälter (9) oder an einem Rohr der Gemengezuführung (2) ein sekundärer Schwingungserreger (10) angeordnet ist, mittels dessen das Material entlüftet, vorverdichtet und zum Druckkopf (1) gefördert wird.

4. Vibrationsdrucksystem nach einem der Ansprüche 1 bis 3, umfassend mehrere primäre Schwingungserreger (5) und/oder mehrere sekundäre Schwingungserreger (10).

5. Vibrationsdrucksystem nach einem der Ansprüche 1 bis 4, **dadurch gekennzeichnet, dass** die Schwingungserregung periodische und/ oder transiente Formen inklusive Impulsen aufweist.

6. Vibrationsdrucksystem nach einem der Ansprüche 1 bis 5, **dadurch gekennzeichnet, dass** die Haupteinwirkung der Schwingungserregung am Druckkopf (1) von 5 Hz bis 1000 Hz, vornehmlich im Bereich von 40 Hz bis 100 Hz liegt.

7. Vibrationsdrucksystem nach einem der Ansprüche 1 bis 6, **dadurch gekennzeichnet, dass** sich die Erregungsparameter für den primären Schwingungserreger (5) und den sekundären Schwingungserreger (10) unterscheiden, bevorzugt nach Zeitdauer, Intensität und/oder Signalform.

8. Vibrationsdruckverfahren zum 3D-Drucken von Strukturen aus einem thixotropen, Material, bei dem
- das Material von einem Vorratsbehälter (9) oder einer Gemengezuführung (2) unter Ausnutzung der Schwerkraft zu einem Druckkopf (1) gefördert wird,
- das Material am Druckkopf (1) in primäre Schwingungen versetzt wird, welche die Fließgrenze und Viskosität des Materials temporär herabsetzen, sodass es unter Ausnutzung der Schwerkraft aus einer Druckdüse (6) in einen Aktivierungsbereich austritt,
- wobei die primären Schwingungen auf bereits aus der Drückdüse (6) ausgetretenes und im Aktivierungsbereich befindliches Material übertragen werden, so dass das ausgetretene Material und bereits im Aktivierungsbereich befindliche, grünstandfeste Drucklagen einen Lagenverbund im gleichen System frisch-in-frisch bilden,
- wobei sich während des Druckvorgangs der Druckkopf (1) und damit der Aktivierungsbereich entlang einer Bewegungsrichtung (4) bewegt, so dass bei dem ausgetretenen Material, sobald es außerhalb des Aktivierungsbereichs ist, die Fließfähigkeit wieder abklingt und Grünstandfestigkeit erreicht wird.

9. Vibrationsdruckverfahren nach Anspruch 8, wobei die Schwingungserregung des Materialgemenges partiell im Bereich des Auftrages im Aktivierungsbereich auf die darunterliegende Schicht einwirkt, so dass die Drucklagen sich frisch-in-frisch verbinden.

10. Vibrationsdruckverfahren nach Anspruch 8 oder 9, wobei die Schwingerregung des Materials durch periodische und/oder transiente Formen inklusive Impulsen erfolgt.

11. Vibrationsdruckverfahren nach einem der Ansprüche 8 bis 10, bei dem das Material im Vorratsbehälter (9) oder der Gemengezuführung (2) in sekundäre Schwingungen versetzt wird, so dass das Material entlüftet, vorverdichtet und fließfähig wird.
